# EUROPEAN PATENT SPECIFICATION

(11) **EP 2 686 616 B1**
(45) Date of publication and mention of the grant of the patent: **18.04.2018**
(21) Application number: 12720664.7
(22) Date of filing: 19.03.2012
(51) Int. Cl.: F24F 5/00

(54) **DISPLACEMENT VENTILATION SYSTEM AND INLET PART FOR SUCH A SYSTEM**
VERDRÄNGUNGSLÜFTUNGSSYSTEM UND EINLASSTEIL FÜR EIN SOLCHES SYSTEM
SYSTÈME DE VENTILATION PAR DÉPLACEMENT D'AIR ET PARTIE D'ENTRÉE POUR UN TEL SYSTÈME

(30) Priority: 18.03.2011 NL 2006421
(43) Date of publication of application: 22.01.2014
(73) Proprietor: Autarkis B.V., 7451 PK Holten (NL)
(72) Inventor: SCHMITZ, Antonius, Henricus, Hubertus, NL-6061 CT Posterholt (NL)
(74) Representative: van Essen, Peter Augustinus
(86) International application number: PCT/NL2012/050170
(87) International publication number: WO 2012/128625

(56) References cited:
- EP-A2- 1 455 156
- WO-A2-01/38810
- WO-A2-03/102484
- DE-A1- 10 107 145
- DE-A1-102008 032 348
- JP-A- 2002 195 770

## Description

### TECHNICAL FIELD OF THE INVENTION

The invention relates to a displacement ventilation system for controlling the temperature in a space. More particularly, the invention relates to an inlet part for an displacement ventilation system. The invention further relates to a partition wall system including the displacement ventilation system.

### BACKGROUND OF THE INVENTION

DE10107145 relates to an acoustic ceiling or wall with good sound-proofing properties includes a material with a latent heat capacity. According to the publication, its invention relates to the elimination of a sound reflection serving in rooms sound-absorbing, suspended ceiling or wall. It consists of construction boards, which is made from porous particles that are adhered by pressing them together. To acoustically active function, and on the other hand to ensure its task of temperature control, is the acoustic ceiling or wall in such a way through the pores of the porous integrated particles or in the liquid form by gelling stabilized packing materials with latent heat capacity integrated, that the permeability of the acoustically effective pores the acoustic ceiling or wall is maintained.

WO03102484 discloses conditioning of the ambient air in the room of a building in terms of heat and/or cold and optionally humidity. Supplied air flows into the room of the building and extracted air is conducted out of said room, whereby a sensitive or recuperative heat exchange is carried out between the supplied air and the extracted air, preferably prior to the influx of supplied air and after the discharge of the extracted air from the room of the building. A separate supplied-air conduction device, which forms a supplied air flow, is provided and the temperature of the ambient air is modified by latent heat accumulator bodies that are arranged in the room of the building. Said latent heat accumulator bodies can be located in the vicinity of the ceiling. Thermal buffer elements that operate by means of latent heat can also be provided.

Displacement ventilation systems are commonly known. The principle of displacement ventilation involves air supply and distribution in a room by upwards displacement, i.e. as direct as possible through-flow in the occupied zone in order to achieve high ventilation efficiency. In addition, air distribution by displacement generally makes it possible to supply a larger quantity of air than for conventional mixing ventilation, which requires concentrated supply at high velocity.

The air flow pattern differs greatly from that caused by conventional mixing supply jets. Air is supplied at low velocity to the occupied zone, often near the floor. The new air is normally slightly cooler than the air in the room, and thus has a tendency to fall and spread out over the floor in a uniformly thin layer (approximately 20 cm), due to gravity, without mixing significantly with the room air above. This process leads to a continual upwards uniform displacement of air in the room, akin to filling a bathtub with water.

Air in the occupied zone becomes both heated and polluted by occupants etc. The air in the occupied zone rises upwards due to natural convection. The occupied zone is the zone in a room where a human is normally present. This is the air zone which extends to about 2 meter above the floor surface in a room.

The air in the occupied zone is thus generally fresher than for mixing ventilation. Air is extracted from the room at ceiling level.

In addition, for localized pollutant sources that generate heat, such as humans, the released pollutants rise rapidly to above the occupied zone, due to buoyancy forces (an upwards flowing natural convection plume). This local upwards flow also brings up a steady stream of fresh air from the floor up to the breathing zone of occupants. The air in the breathing zone is thus slightly fresher than elsewhere in the room at the same height.

The supplied air flow rate and its cooling capacity are limited by the size of the air supply areas, and on the magnitude of the air flow rate that is technically and/or economically justifiable. The cooling capacity is also limited by how cold the supply temperature can be without causing local discomfort (cold draught along floor).

### SUMMARY OF THE INVENTION

The object of the invention is to provide an improved displacement ventilation system which overcomes at least one of the disadvantages of the known displacement ventilation systems described above and which provided improved comfort for the occupants.

According to the invention, this object is achieved by a displacement ventilation system of claim 1.

Advantageous embodiments and further ways of carrying out the invention may be attained by the measure mentioned in the dependent claims.

According to the invention, the air supply part comprises an inlet configure for supplying an air flow into the occupied zone, an air duct for supplying the airflow to the inlet and a PCM-layer provided with a phase change material wherein a first side of the PCM-layer facing the space is in thermal contact with the space and a second side of the PCM-layer facing the air duct is in thermal contact with air in the air duct.

The invention is based on the recognition that in displacement ventilation systems a cooled air flow has to be blown into a space to keep the temperature at a desired room temperature. The temperature of the cooled air flow has to be lower than the desired room temperature. In summer this would mean that the temperature of the supplied cooled air flow has to be lowered further to keep the room temperature at the desired temperature. Consequently, this will result in discomfort for the occupants. The cold airflow will form a layer of cold air above the floor. The occupants will get cold feet which is undesired. A PCM-layer comprising PCM material having a predefined melting temperature will at one side extract heat from the space and store it as latent heat in the PCM-layer. At the other side of the layer it will heat a cooled air flow up to the melting temperature by extracting latent heat from the PCM-material. In this way, the air in the room is cooled by a heat transfer through the PCM-layer to heat the cool supply air up to the melting temperature of the PCM-material. This reduces the needed cooling capacity. The temperature of the airflow into the space which is at the melting temperature will be higher than the temperature of the supplied air of a conventional displacement system providing the same cooling capacity, which improves the comfort in the occupied zone.

In an embodiment, PCM material is a latent heat storage material and can be selected from the group consisting of paraffin (CₙH₂ₙ₊₂), fatty acids (CH₃(CH₂)₂ₙCOOH), Salt hydrates like MnH₂O, eutectic salts like sodium sulfate decahydrate (NaSO₄ • H₂O or Glauber's salt), Calciumchloride hexahydraat CaCl₂•6H₂O. and combinations thereof. Additionally, the PCM can be set at a temperature difference of 1-1.5 degrees Celsius. For instance, a PCM with a melting temperature of 20°C gives less heating then cooling capacity, while in contrast PCM with a melting temperature of 23°C provides more heating than cooling capacity.

In the invention, the system is for conditioning a room in a building, said room having walls, a floor and a ceiling, wherein that said PCM-layer is provided in front of at least part of at least one wall at a distance from said at least one wall for providing the air duct between a wall surface and said second side of said PCM-layer, and wherein said inlet is provided at or near said ceiling and said air duct comprising an outlet near or at said floor. This allows the system to be introduced in existing buildings, and to be provided into new buildings just as easy.

In the invention, the air duct runs from near or at said ceiling to near or at said floor.

In the invention, the PCM-layer is provided from said inlet to said outlet.

In an embodiment, the PCM layer is provided in a layer thickness of 0.5-2.0 cm and at a distance of 0.3-3.0 cm from a wall.

In an embodiment, the PCM layer provides 2.5-4 kg of PCM material per m³ of space. Using for instance some of the PCM materials mentioned below, this allows a space to be conditioned for 8-12 hours, i.e., a working day.

In an embodiment, the wall is part of a portioning wall system comprising system wall elements and sheets provided with a layer of PCM material positioned at a distance from said system wall elements.

In an embodiment of the invention, the first side forms the exterior surface of a wall. As walls very often form a very large part of the surface of a room, the cooling capacity per m² wall surface could be small per m² floor area.

In an embodiment of the invention, the air duct is in the form of an air layer between the PCM-layer and a support to which the PCM-layer is attached. In a further embodiment, the air supply part further comprises spacers configured for attaching the PCM-layer to the support and positioning the PCM-layer at a predefined distance from the support to form the air duct. These features allows us to adapt an existing mixing ventilation system into a displacement ventilation system easily and to furnish a standard wall panel at one or two sides with an air supply part.

In a further embodiment of the invention, a spacer comprises an elongated body extending in vertical direction and comprises a profile for receiving an edge of the PCM-layer. In an advantageous embodiment, a spacer longitudinally forms a part of the surface of the air duct. In this way, a spacer has two functions, placing the PCM-layer at a predefined distance from a wall surface, and providing two sides of the airduct from the ceiling to the floor.

In an embodiment of the invention, the PCM-layer is in the form of a plane plate. This embodiment is advantageous for flat wall surfaces and could be produced easily. However, in principle the PCM-layer could have any form which follows the contour of the support to which the PCM layer is attached. When the PCM-layer is attached to the support, the surface of the PCM-layer is essentially parallel to the surface of the support to from the air duct.

In an embodiment of the invention, the PCM-layer at the first side is covered with a heat conductive sheet. More particular, the heat conductive sheet is a metal sheet. These features protects the PCM-layer for damages and provides thermal conductance from the space to the PCM-material. In a particular embodiment of the invention, the heat conductive sheet is a perforated sheet. A perforation degree of 20 - 30%, more particular 25%, has been found very suitable to provide enough convective heat transfer. The perforations provide a direct thermal contact between the PCM-layer and the space. In a particular embodiment, a heat conductive adhesive material mechanically couples the PCM-layer and the heat conductive sheet. By filling the space between the heat conductive sheet and PCM-layer with a heat conductive adhesive material, thermal resistance due to air pockets between said two layers can be prevented.

In an embodiment of the invention, the PCM-layer is composed of a stack of rectangular sub-panels, wherein each sub-panel comprises a housing which is filled with PCM-material and has a length axis which is perpendicular to a length-axis of the PCM-layer. This feature allows to use smaller and easier to manufacture PCM-units to assemble a larger PCM-layer. Less special arrangements in a PCM-unit are needed to reduce deformation of the first side of the PCM-layer due to the coefficient of expansion of the PCM-material in the housing of a PCM-unit.

In an embodiment of the invention, the PCM-layer comprises a housing which is filled with a PCM-material wherein the housing is made of a thermoplastic material. In an embodiment, said thermoplastic material comprises polypropylene, polyethylene, polyester, and/or nylon. In an embodiment thereof, said housing comprises a blow moulded housing containing the PCM material. Thus, said housing in fact forms a container for said PCM material. In an embodiment, said housing is filled with a spacer material dividing said housing into smaller chambers. This stabilises the PCM material. In an embodiment, said spacer material comprises an open cell foam material. Usually, such a foam has a pore fraction of at least 95 %. In an embodiment, said foam comprises a polyurethane foam. In this embodiment, the walls of the housing have a thickness of less than 2.5 mm. In an embodiment, the walls have a thickness of less than 1.5 mm. In order to provide sufficient strength, the walls of the housing of the PCM material usually have a thickness of more than 0.3 mm. In an embodiment, the walls have a thickness of more than 0.5 mm. In an embodiment, the PCM layer is made up of housings which are at least about 50cm x 30 cm. Usually, the housings are at least about 60 cm x 40 cm. In an embodiment, several of these housings with PCM material are attached to a sheet of material. In an embodiment, said sheet of material is heat conductive. In an embodiment, said sheet has a structural strength in order to support the PCM layer. This will be explained further in reference to the drawings. Thus, wall cladding and finishing plates can be provided that are both aesthetic and functional. Thus, the PCM-layer can be integrated in a partition wall system, for instance. When providing these PCM-layers at a distance from a wall or partition wall, a duct is created between the wall and the PCM-layer. In this duct, air exchanges heat with said PCM layer before flowing into a room or space in a building. Thus, in an embodiment, the PCM-Material is provided within 5 cm of said wall. In an embodiment, the PCM layer is provided within 3 cm of said wall. Usually, the distance from a wall is more than 3 mm. In these constellations, the PCM layer has I thickness of between 3 and 20 mm. In an embodiment, the PCM layer is between 5 and 15 mm thick. Thus, the entire displacement ventilation system will extend less than 7 cm into a room of a building. In most embodiments, it will extend as little as 2 cm into the room. Thus, when providing s wall of 3 m wide and 2 m high allows providing as much as 7-10 kg of PCM material per m² of floor in a room. This allows a use in daytime of up to 10 or 12 hours and allowing said PCM material for instance to regenerate during night time. In the air duct, the air speed can be kept below 2 m/s, even below 1.5 m/s, and still provide sufficient fresh air at the right temperature.

In an embodiment of the invention, the air supply part extends from ceiling to floor, wherein the inlet forms a proximal end of the air duct which is located at floor level and wherein a distal end of the air duct is located at ceiling level. These features allows to couple the air-supply part to the inlet of a conventional mixing ventilation system to provide a displacement ventilation system. In this case, an air duct interface part configured for interfacing the airflow from a standardized ceiling supply duct into the distal end of the air duct of the air supply part, is very suitable. In an embodiment, the PCM layer also extends from ceiling to floor. In particular, the PCM layer extends up to less than 20 cm from the floor. In this way, a outlet can be provided for the air duct to exit conditioned air. In an embodiment, the PCM layer extends to less than 10 cm from the floor. In an embodiment, the PCM layer extend up to less than 20 cm from the ceiling. In an embodiment, the PCM layer extends up to less than 10 cm from the ceiling. In this way, it is even possible to provide an air inlet for induced air. Thus, air from inside a room can be added in the air duct as secondary air, in order to flow with primary, fresh air in the air duct. The flow rate of primary air causes a lower pressure and induces a flow of air via the inlet for induced air. In this respect, the ceiling is the top of the room form the point of view of free air flowing. In some rooms, a decorative ceiling is provided below the actual physical ceiling, for instance the concrete ceiling. The decorative ceiling can block the air in a room from easily rising to the physical ceiling.

It is a further aspect of the invention to provide an improved method of controlling the climate of a space, occupied with humans. The method comprises providing a PCM-unit comprising all technical features of an air supply part according to the invention in a room of a building, wherein the building comprises a ventilation system to supply air to said room, coupling the PCM unit to a ventilation inlet opening of the ventilation system in said; and activating the ventilation system to provide an airflow through the air duct of the PCM-unit.

It is a further aspect of the invention to provide a PCM-unit comprising all technical features of an air supply unit according to the invention. The PCM-unit could be used to improve the air-conditioning characteristics, such as temperature in occupied zone, power consumption of the ventilation system.

It will be clear that the various aspects mentioned in this patent application may be combined and may each be considered separately for a divisional patent application. Other features and advantages of the invention will become apparent from the following detailed description, taken in conjunction with the accompanying drawing which illustrate, by way of example, various features of preferred embodiments of the invention.

### BRIEF DESCRIPTION OF THE FIGURES

These and other aspects, properties and advantages of the invention will be explained hereinafter based on the following description with reference to the drawings, wherein like reference numerals denote like or comparable parts, and in which:
FIG. 1 illustrates an embodiment of an displacement ventilation system according to the invention;
FIG. 2 illustrates a front view of an embodiment of an air supply part for use in the embodiment of FIG. 1;
FIG. 3 illustrates a cross section of an embodiment of an air supply part;
FIG. 4 illustrates a cross section of an embodiment of the air supply part at ceiling level;
FIG. 5 illustrates a top view of an air supply part provided with an air duct interface part; and
FIG. 6 illustrates several views of an embodiment of an air duct interface part.

### DESCRIPTION OF EMBODIMENTS

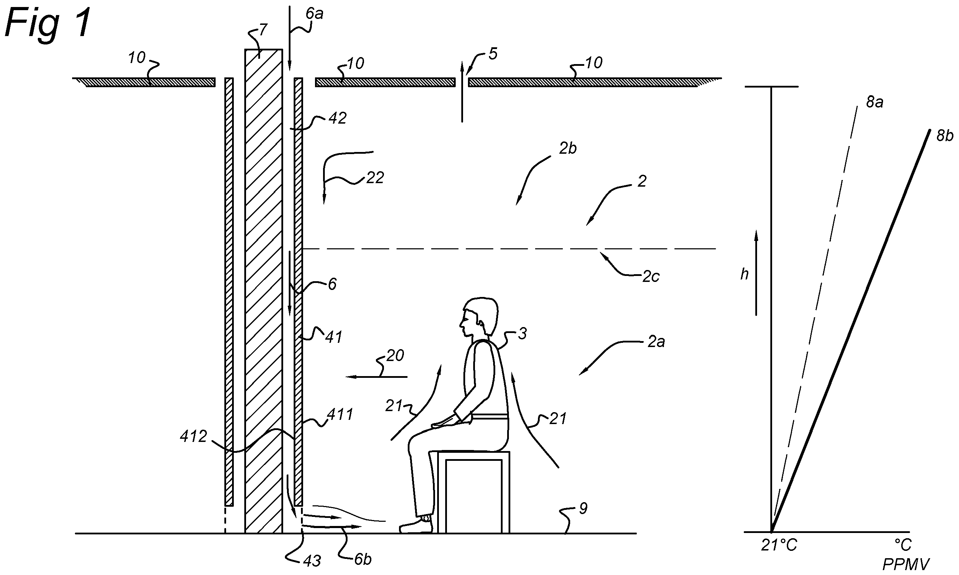

Figure1 illustrates an exemplar embodiment of a displacement ventilation system 1 according to the invention. The displacement ventilation system is configured for conditioning the climate in a space 2. The displacement ventilation system comprises an air supply part 4 configured for supplying fresh air directly to an occupied zone of the space; and an air extraction part 5 configured for extracting air from said space above the occupied zone. In context of the present invention, the occupied zone is the zone in which occupant live. Normally, the occupied zone is the air-layer up to a height of 2 metres above the floor. The occupied zone is important for comfort consideration. The extraction part could be any suitable air duct system to extract air from a space above the occupied zone.

The air supply part 4 comprises an inlet 43 configured for supplying an air flow 6 into the occupied zone. In the embodiment shown in FIG. 1 the inlet 43 extends from the floor to 10 cm above floor level. The air supply part 4 further comprises an air duct 42 for supplying the airflow 6 to the inlet and a PCM-layer provided with a phase change material PCM. The PCM material has a melting temperature corresponding to the desired occupied zone temperature. A first side 411 of the PCM-layer 41 facing the space 2 is in thermal contact with the space. A second side 412 of the PCM-layer 41 facing the air duct is in thermal contact with air in the air duct 42. The PCM-layer 41 is positioned parallel to a support structure 7. In FIG. 1, the support structure 7 is in the form of a wall between to rooms. It should be noted that in FIG. 1 both sides of the wall are covered with a PCM-layer 41. The space between the support 7 and PCM-layer 41 form the air duct 42. The air flow 6 flows down in the air duct from ceiling level to floor level.

With displacement systems, an air flow 6b is introduced at low velocity through air inlets in the form of floor terminals or other diffusers at floor level 9. With conventional displacement systems, cool air floods the floor 9 in much the same way as water would. The room heat sources, occupants, electrical devices and other heating sources, lift the air up and the air 21 passes through the occupied zone 2a and is exhausted at high level via outlets 5 at ceiling level 10.

As the inlets of displacement units are provided at low level, a considerable vertical temperature gradient naturally occurs between the floor and ceiling. The volume of air supplied to a room is height dependant because of this gradient and the air volume supplied for displacement ventilation is proportional to the supply air and exhaust air temperatures.

With displacement ventilation, the flow of air is maintained by convective forces, which also have the effect of the concentration of pollutants rising from floor to ceiling. The graph of FIG. 1 illustrates the temperature 8a and concentration of pollutants 8b. The vertical axis corresponds to the height above the floor and the horizontal axis corresponds to the temperature in °C and parts per million by volume (ppmv). Research has indicated that there is less likelihood of complaints due to draughts using displacement ventilation and the air is likely to be cleaner as contaminants are continuously removed from the occupied zone by the exhaust part of the ventilation system and are not mixed with the airflow blown into the space when using a mixing ventilation system.

The displacement ventilation system of the present invention has the advantage over the known displacement ventilation system that the cool air 6a that is supplied to the terminals or diffusers is heated in the air duct 42 by the latent heat stored in the PCM-material of the PCM-layer 41. The PCM-material has received its latent heat from the space by radiation 20 and convention 22. In this way, the PCM-layer cools the space and induces an air flow 22 along the PCM-layer 41 from the zone 2b above the occupied zone 2a downwards in to the occupied zone 2a. The dashed line 2c indicates the borderline between the occupied zone 2a and the zone 2b above the occupied zone. However, as a constant flow of air having the desired space temperature is supplied to the space, the occupants will not get cold feet and will consider the temperature as very comfortable. Furthermore, as the temperature of the PCM-layer will be lower than the temperature in the space, the occupants will not experience heat radiation from the walls which are provided with a PCM-layer.

Preferably, the temperature and speed of airflow supplied to the air duct 42 is such that at day time, i.e. when the space is occupied, the heat retrieved by the PCM-layer from the space is larger than the heat extracted from the PCM-layer. Furthermore, the temperature of the airflow in the air duct should gradually change to the temperature of melting point of the PCM-material and should have essentially the temperature of the melting point of the PCM material just when the airflow flows along the PCM-layer part adjacent to the inlet 43.

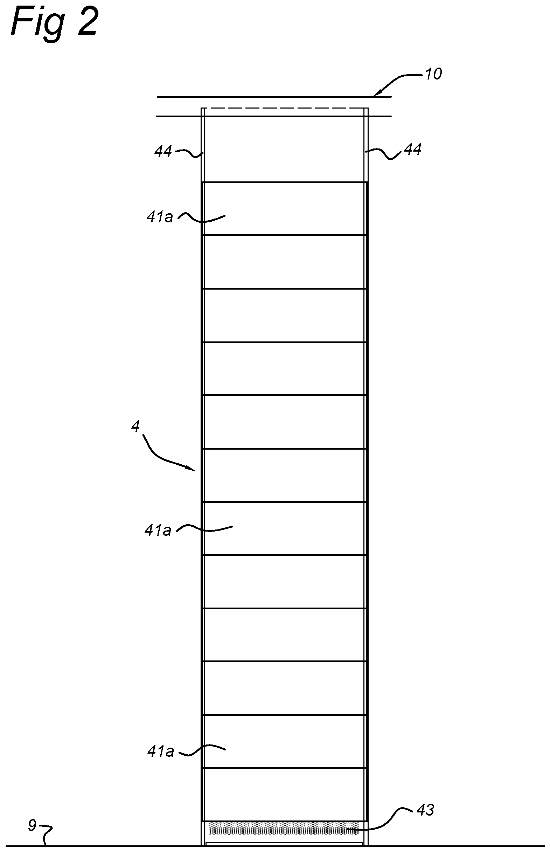

The air supply part 4 could be in the form of wall panels forming the exterior of a wall. The PCM-layer extends along the wall in at least in the zone above the occupied zone of the space. Due to the temperature gradient in the space, the PCM-layer may extend to the inlet opening 43, forming the floor terminal of diffuser, to supply a slow airflow into the space. The PCM-layer could be in the form of one housing of polypropylene which is filled with a PCM-material having a predefined melting temperature or melting point. Preferably, the melting temperature is in a range from 5°C below the desired space temperature up to the desired space temperature. FIG. 2 illustrates a front view an embodiment of a air supply part 4. In this embodiment, the PCM-layer comprises a stack of PCM-sub panels 41a. The sub panels are rectangular and have a longitudinal axis which is perpendicular to the longitudinal axis of the PCM-layer as a whole. At the underside of the air supply part 4, just above the floor, a grid is provided which forms the inlet 43 for the airflow into the space. At each longitudinally side an elongated body 44 is provided to attach the PCM-layer to the wall and to position the PCM-layer at a predefined distance from the surface of the wall to form the air duct.

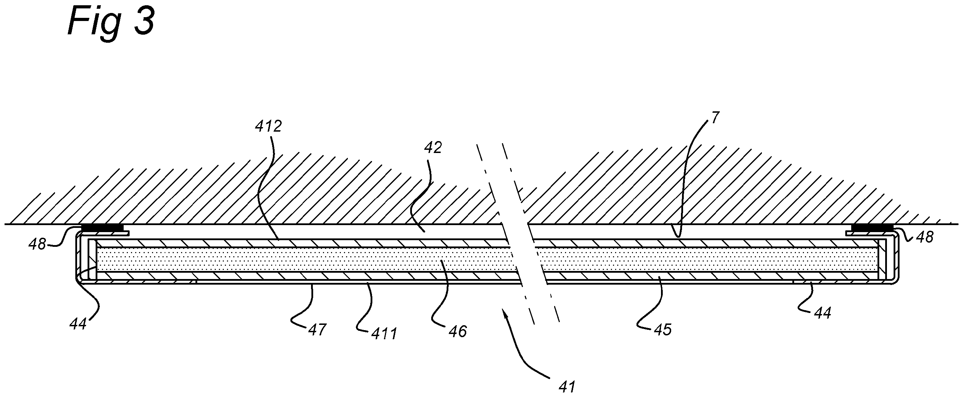

FIG. 3 illustrates a horizontal cross section of an air supply part 4. The PCM-layer 41 comprises a housing 45 and is filled with a PCM-material 46. The PCM-layer 41 is at each side positioned in the elongated body 44. The elongated body 44 in FIG. 3 is an U-shaped profile. The side 411 of the PCM-layer 41 between the elongated bodies 44 which face the space is covered with a sheet 47 of a heat conductive material. The sheets protects the housing of the PCM-layer for damaging. The sheet could be a metal sheet or any suitable material which conducts heat and could not easily be damaged. The heat conductive sheet should contact the housing over essentially the whole contact surface to ensure heat transfer from the heat conductive sheet 47 to the PCM-layer 41. In an embodiment, the heat conductive sheet is mechanically coupled to the PCM-layer by means of a heat conductive adhesive material. Alternatively, the heat conductive sheet could be in the form of a perforated sheet. In this embodiment, the air in the space is in direct contact with the housing 54 of the PCM-layer and the PCM-layer could retrieve at least partially the heat from the space through the perforations of the perforated sheet. In the embodiment it is not essential that the heat conductive sheet is over the whole surface touching the housing of the PCM layer 41. An adhesive material could be used to ensure that the whole area of perforated sheet is in thermal contact with the housing 45 of the PCM-layer 41. It should be noted that the heat conductive sheet 47 and the two elongated bodies 44 for receiving edges of the PCM-layer could be made from one piece of material. This one piece of material could further include the grid or diffuser of the inlet of the air supply part.

FIG. 3 shows additional strips 48 to affix the elongated bodies 44 to the support 7. The thickness of the strips 48 define the final distance between the support 7 and the housing of the PCM-layer and consequently the size of the cross section of the air duct between the PCM-layer and the support. In an embodiment, the distance between the support 7 and the PCM-layer 41 is about 5mm and the thickness of the PCM-layer is 10mm. However, the distance and thickness are design parameters which depend on the heat generation in the space due to occupants and electric devices and external heat sources such as sunlight, the desired space temperature of the supplied are to the air supply part, the air flow through the air duct, the length of the air duct, melting temperature of the PCM-material in the PCM-layer. The PCM-layer has an optimal thickness, i.e. latent heat storage capacity, when it is just fully charged at a moment in a day which corresponds to the end of use of the space by occupants and is just fully discharged at a time in a day when occupants start to use the space.

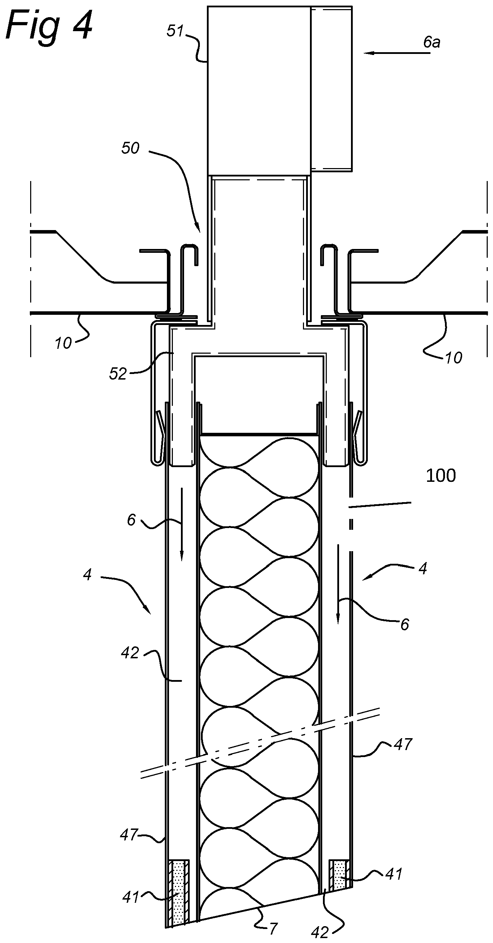

FIG. 4 illustrates a cross section of a ceiling side of an embodiment of the invention. A wall structure 7, forming the support for the air supply part 4 comprises at both side an air supply part 4. It should be noted that the support structure 7 could by an integrated part of the air supply part 4. This embodiment is very suitable to provide elements for relocatable partitioning systems for commercial buildings. As the air supply part is integrated in the element of the partitioning system, and modular ceilings are used, it is easy to provide in the created spaces a displacement ventilation system.

To couple the air duct of the air supply part 4 to an existing air supply duct, an air duct interface part 50 is provided. The air duct interface part 50 interfaces the airflow 6a from a standardized ceiling supply duct into a ceiling side end of the air duct of the air supply part 4. In FIG. 4, the inlet opening of the air duct interface 50 is coupled to the ceiling supply duct and has a cross section with a circular shape. The ceiling supply duct could be a flexible air hose (not shown). The outlet opening of the air duct interface 50 is coupled to the air supply part 4 and has a cross section which is long and narrow.

In an embodiment, the displacement ventilation system can be provide to allow induced air from the space to be added to the flow of air 6. The induced air coming from the space is added to the airflow 6 exiting from the air duct interface part 50. To that end, induction passages 100 can be provided at the upper end of the room, usually near and below the ceiling. In the embodiment of figure 4, for instance, a grid or inlet 100 can be provided in heat conductive sheet 47, for instance near the location of the reference number 47. Thus, air from the space can be used to provide a sufficient flow rate in case the required amount of fresh air is not sufficient for providing the flow rate that is needed to condition at least the air temperature space, i.e., to provide the required heating or cooling.

In general, the displacement ventilation system is provided with a means for providing an induced flow of air. To that end, the system is provided with an inlet for induced air 100, induced by the air flow from the inlet. In an embodiment, the inlet for induced air 100 is provided near the upper end of the space, usually near the ceiling level 10. In an embodiment, the inlets 52 are provided with nozzles that increase the air speed of the airflow. The nozzles are positioned above the inlet for induced air 100. In an embodiment, the inlet for induced air is a slit of 5-25 mm high. In an embodiment, the inlet is a slot or slit of 10-20 mm high. For a room having 1-4 m³/h inflow of fresh air per m³ of room, the slit allows 2-4 times this amount to be introduced as induced air from the room. In particular, the inlet should allow an induced air flow of 2.5-3.5 times the inflow of air. Using a slit of the mentioned height has an air speed of 0.5-2 m/s of induced air. In practise, the surface area of the inlet for induced air will be 15-50 cm²/m³ of room volume.

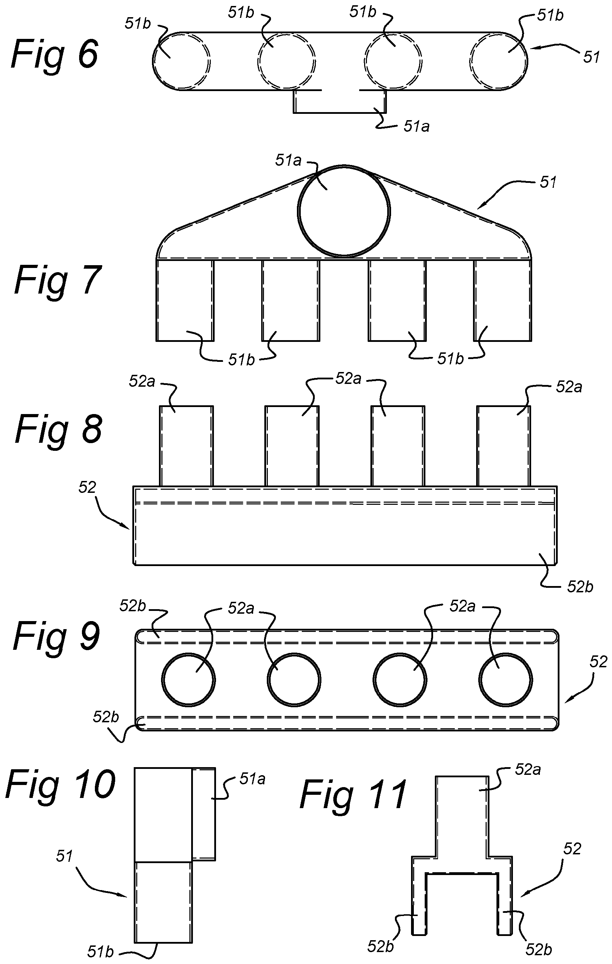

The air duct interface part 50 in FIG. 4 comprises a first part 51 and a second part 52. FIGS. 6, 7 and 10 show a top view, a front view and a side view of the first part 51, respectively. FIGS. 8, 9 and 11 show a front view, a top view and a side view of the second part 52, respectively. The first part 51 is configured to distribute the airflow from one large inlet 51a over four smaller outlets 51b. The second part 52 comprises four corresponding smaller inlets 52a to be coupled with the four smaller outlets 51b of the first part by a sliding movement wherein the inlets 52a of the second part 52 are slit in/over the outlets 51b of the first part 51. The second part 52 is configured to distribute the airflow from the for inlets 52a evenly across the length of the long and narrow outlet 52b of the second part 52. The long and narrow outlet 52b is configured to be coupled to the long and narrow air duct of two air supply parts, wherein the two air supply parts are located a both sides of a partitioning wall. It should be noted that the air interface part 50 could also be manufactured as a one piece part. Furthermore, the number of smaller outlets 51b and smaller inlets could be larger than 4. Without any inventive skill one can adapt the second part 52 to have only outlet. This embodiment is suitable when an air supply part is attached to existing walls of a space and the air flow from a ceiling inlet has to be interfaced to the air supply part.

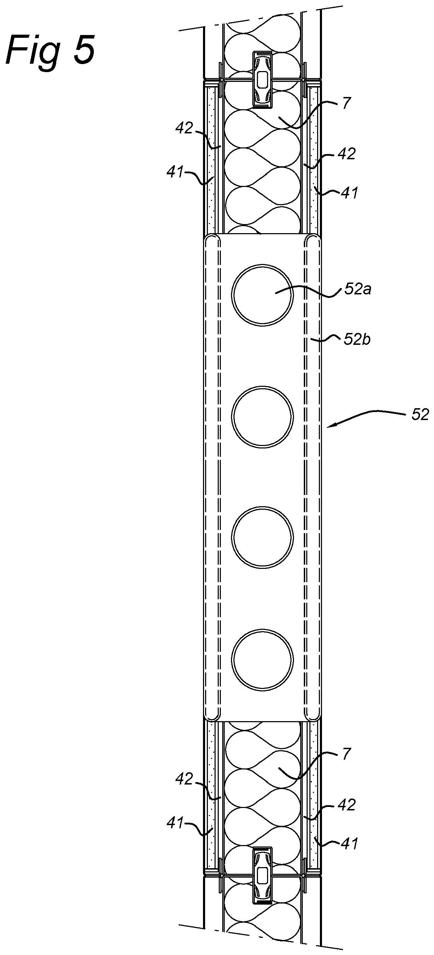

FIG. 5 shows a top view of the embodiment shown in FIG. 4. The first part has been removed from the second part 52. FIG. 5 shows the profile of the four inlets 52a of the second part 52 and the long and narrow outlet 52b. The long and narrow outlet 52b extends along at least a half the width of the air duct 42 between the PCM-layer 41 and the support structure 7, i.e. system wall element.

In the embodiments of a displacement ventilation system according to the invention a cool air flow, i.e. lower than the desired space temperature is supplied to air supply part and transported along the PCM-layer. The temperature of the cool air flow rises in the air duct of the air supply part to the melting temperature of the PCM-material before the flow is supplied to the space. Furthermore, the PCM-layer extracts heat from the space by convection and radiation. However, in the event there are not enough heat sources to keep the temperature at the desired space temperature, a heated airflow could be supplied to the air supply part. In this event, the PCM-layer will give off stored latent heat to the space when the temperature falls below the melting temperature of the PCM-material. The temperature of the heated air flow will be cooled down to the melting temperature and supplied to the occupied space at floor level. In this way, almost no turbulent airflows will occur in the space and the occupant will recognize this as very comfortable. Furthermore, the storage capacity of latent heat in the PCM-layer allows to reduce the maximal heating capacity of the heating system of the building.

The measures described hereinbefore for embodying the invention can obviously be carried out separately or in parallel or in a different combination or if appropriate be supplemented with further measures; it will in this case be desirable for the implementation to depend on the field of application of the system.

## Claims

1. A displacement ventilation system configured for conditioning the climate in a room (2) in a building, said room having walls (7), a floor (9) and a ceiling (10), and comprising:
an air supply part (4) configured for supplying fresh air directly to an occupied zone of the room (2) and comprising an inlet (43) configure for supplying an air flow (6b) into the occupied zone;
an air extraction part (5) configured for extracting air from said room (2) above the occupied zone;
an air duct (42) for supplying the airflow to the inlet (43), and
a PCM-layer (41) provided with a phase change material, a first side (411) of the PCM-layer (41) facing the room being in thermal contact with the room and a second side (412) of the PCM-layer (41) facing the air duct (42) being in thermal contact with air in the air duct (42), **characterized in that** said air duct (42) runs from near or at said ceiling (10) to near or at said floor (9), has an inlet provided at or near said ceiling (10) and comprises an outlet (43) near or at said floor (9), and
wherein said PCM-layer (41) is provided from said inlet to said outlet (43) of said air duct (42).

2. The system of claim 1, wherein said PCM-layer (41) is provided in a layer thickness of 0.5-2.0 cm in front of at least part of at least one wall (7) at a distance of 0.3-3.0 cm from said at least one wall (7) for providing the air duct (42) between a wall surface and said second side (412) of said PCM-layer (41).

3. The system of claim 1 or 2, wherein said PCM layer provides 2.5-4 kg of PCM material per m³ of said room.

4. The system of any one of the preceding claims, wherein said at least one wall is part of a portioning wall system comprising system wall elements and sheets provided with a layer of PCM material positioned at a distance from said system wall elements.

5. The system of any one of the preceding claims, wherein said outlet (43) is provided by a slit near the floor (9).

6. The system according to any one of the preceding claims, **characterized in that** the first side (411) forms the exterior surface of a wall.

7. The system according to any one of the preceding claims, **characterized in that** the air supply part further comprises spacers configured for attaching the PCM-layer to the support and positioning the PCM-layer (41) at a predefined distance from the support to form the air duct (42).

8. The system according to the previous claim, **characterized in that**, a spacer comprises an elongated body extending in vertical direction and comprises a profile for receiving an edge of the PCM-layer.

9. The system according to any of the preceding claims, wherein the PCM-layer (41) is in the form of a plane plate.

10. The system according to any of the preceding claims, wherein the PCM-layer (41) at the first side is covered with a heat conductive sheet, in particular the heat conductive sheet is a metal sheet, more in particular wherein the heat conductive sheet is a perforated sheet, and wherein in particular a heat conductive adhesive material mechanically couples the PCM-layer (41) and the heat conductive sheet.

11. The system according to any of the preceding claims, wherein the PCM-layer (41) is composed of a stack of rectangular sub-panels, wherein each sub-panel comprises a housing which is filled with PCM-material and has a length axis which is perpendicular to a length-axis of the PCM-layer, wherein in particular wherein the housing is made of polypropylene.

12. The system according to any of the preceding claims, wherein the PCM-material has a melting temperature corresponding to a desired temperature in the occupied area of said space.

13. A method of controlling the climate of a space occupied with humans, the method comprising providing a PCM-unit comprising all technical features of an air supply part (4) according any of the preceding claims in a room (2) of a building, wherein the building comprises a ventilation system to supply air to said room (2),
coupling the PCM unit to a ventilation inlet opening of the ventilation system in said building; and
activating the ventilation system to provide an airflow through the air duct (42) of the air supply part (4).

14. A partition wall system including the displacement ventilation system according to any one of the preceding claims.

## Patentansprüche

1. Ein Verdrängungslüftungssystem, ausgelegt für die Konditionierung des Klimas in einem Raum (2) in einem Gebäude, wobei dieser Raum mit Wänden (7), einem Boden (9) und einer Decke (10) ausgestattet ist, und aufweist:
ein Luftzufuhrteil (4), das dafür ausgelegt ist, einem besetzten Bereich des Raums (2) direkt Frischluft zuzuführen und das einen Einlass (43) aufweist, der dazu ausgelegt ist, einen Luftzufluss (6b) in die genutzte Zone bereitzustellen;
ein Luftabzugsteil (5), das dafür ausgelegt ist, die Luft aus dem genannten Raum (2) über dem besetzten Bereich abzuziehen;
einen Luftkanal (42) zur Bereitstellung des Luftstroms zum Einlass (43) und eine mit einem Phasenwechselmaterial ausgestattete PCM-Schicht (41), wobei eine erste Seite (411) der PCM-Schicht (41) dem Raum zugewandt ist, wobei sie in thermischem Kontakt mit dem Raum steht, und eine zweite Seite (412) der PCM-Schicht (41) dem Luftkanal zugewandt ist,
wobei sie sich in thermischen Kontakt mit der Luft im Luftkanal befindet, gekennzeichnet in dass der genannte Luftkanal (42) von nahe bzw. an der genannten Decke (10) bis nahe bzw. an dem genannten Boden (9) verläuft, einen Einlass an bzw. nahe der genannten Decke (10) besitzt und einen Auslass (43) nahe bzw. an der genannten Decke (9) aufweist, und wobei die PCM-Schicht (41) von dem genannten Einlass zum genannten Auslass (43) des genannten Luftkanals (42) verläuft.

2. Ein System entsprechend Anspruch 1, wobei die genannte PCM-Schicht (41) in einer Schichtdicke von 0,5 - 2,0 cm zumindest teilweise vor mindestens einer Wand (7) ausgeführt ist in einer Entfernung von 0,3 - 3,0 cm von der genannten mindestens einen Wand (7), wodurch der Luftkanal (42) zwischen einer Wandoberfläche und der genannten zweiten Seite (412) der genannten PCM-Schicht (41) gebildet wird.

3. Ein System entsprechend Anspruch 1 oder 2, wobei wobei die genannte PCM-Schicht 2,5 - 4 kg PCM-Material pro m³ des genannten Raums aufweist.

4. Das System entsprechend einem beliebigen der obigen Ansprüche, wobei die genannte mindestens eine Wand einen Teil eines Trennwandsystems bildet, das Systemwandelemente sowie in einer Entfernung von den genannten Systemwandelementen angeordnete, mit einer Schicht von PCM-Material ausgestattete Platten aufweist.

5. Das System entsprechend einem beliebigen der obigen Ansprüche, wobei der genannte Auslass (43) von einem Schlitz in der Nähe des Bodens (9) gebildet wird.

6. Das System entsprechend einem beliebigen der obigen Ansprüche, **dadurch gekennzeichnet, dass** die erste Seite (411) die Außenoberfläche einer Wand bildet.

7. Das System entsprechend einem beliebigen der obigen Ansprüche, **dadurch gekennzeichnet, dass** das Luftzufuhrteil weiterhin Abstandshalter aufweist, die zur Befestigung der PCM-Schicht mit dem Träger ausgelegt sind und die die PCM-Schicht (41) in einer vorgegebenen Entfernung von dem Träger halten, um den Luftkanal (42) zu bilden.

8. Das System entsprechend dem vorigen Anspruch, **dadurch gekennzeichnet, dass** ein Abstandshalter einen sich in vertikale Richtung erstreckenden länglichen Körper aufweist und ein Profil aufweist, welches für die Aufnahme einer Kante der PCM-Schicht geeignet ist.

9. Das System entsprechend einem beliebigen der vorigen Ansprüche, wobei die PCM-Schicht (41) die Form einer ebenen Platte aufweist.

10. Das System entsprechend einem beliebigen der obigen Ansprüche, wobei die PCM-Schicht (41) an der ersten Seite mit einer wärmeleitfähigen Auflage bedeckt ist, wobei die wärmeleitfähige Auflage insbesondere ein Metallblech ist, weiter insbesondere, wobei die wärmeleitfähige Auflage ein perforiertes Blech ist, und wobei insbesondere ein wärmeleitfähiges Klebematerial die PCM-Schicht (41) und die wärmeleitfähige Auflage miteinander verbindet.

11. Das System entsprechend einem beliebigen der obigen Ansprüche, wobei die PCM-Schicht (41) aus einem Stapel rechteckiger Teil-Felder zusammengesetzt ist, wobei jedes Teil-Feld ein mit PCM-Material gefülltes Gehäuse aufweist und eine Längsachse besitzt, die rechtwinklig zu einer Längsachse der PCM-Schicht ist, wobei insbesondere das Gehäuse aus Polypropylen besteht.

12. Das System entsprechend einem beliebigen der obigen Ansprüche, wobei das PCM-Material eine Schmelztemperatur hat, die einer erwünschten Temperatur im besetzten Bereich des erwähnten Raums entspricht.

13. Eine Verfahren zur Beherrschung des Klimas eines von Menschen besetzten Raums,
wobei dieses Verfahren besteht aus der Bereitstellung einer PCM-Einheit, die alle technischen Merkmale eines Luftzufuhrteils (4) entsprechend einem beliebigen der obigen Ansprüche in einem Raum (2) eines Gebäudes aufweist, wobei das Gebäude ein Belüftungssystem zur Zufuhr von Luft in den erwähnten Raum (2) aufweist,
wobei die PCM-Einheit mit einer Belüftungs-Einlassöffnung des Lüftungssystems in dem genannten Gebäude gekoppelt wird, und
das Belüftungssystem aktiviert wird, um einen Luftstrom durch den Luftkanal (42) des Luftzufuhrteils (4) bereitzustellen.

14. Ein Trennwandsystem, in welches das Verdrängungsbelüftungssystem gemäß einem beliebigen der obigen Ansprüche aufgenommen ist.

## Revendications

1. Système de ventilation par déplacement configuré pour conditionner le climat dans une chambre (2) dans un bâtiment, ladite chambre ayant des parois (7), un plancher (9) et un plafond (10) et comprenant:
- une partie d'alimentation d'air (4) configurée pour fournir de l'air frais directement à une zone occupée de la chambre (2) et comprenant une configuration d'entrée (43) pour fournir un flux d'air (6b) vers la zone occupée;
- une partie d'extraction d'air (5) configurée pour extraire l'air dudit chamber (2) au-dessus de la zone occupée;
- un conduit d'air (42) pour fournir le flux d'air vers l'entrée (43) et
- une couche-PCM (41) équipée d'un matériau de changement de phase, un premier côté (411) de la couche-PCM (41) face à la chambre étant en contact thermique avec la chambre et un deuxième côté (412) de la couche-PCM face au conduit d'air (42) étant en contact thermique avec l'air dans le conduit d'air (42), charactéricé en ce que ledit conduit d'air (42) s'étend de ou près dudit plafond (10) à proximité ou au niveau dudit plancher (9), a une entrée fournie de ou près dudit plafond (10) et une sortie à proximité ou au niveau dudit plancher (9), et dans lequel ladite couche-PCM (41) est fournie de ladite entrée vers ladite sortie (43) dudit conduit d'air (42).

2. Le système selon la revendication 1, **caractérisé en ce que** ladite couche-PCM (41) est fournie dans une épaisseur de couche de 0,5 à 2,0 cm devant au moins une partie d'au moins une paroi (7) à une distance de 0,3 à 3,0 cm de ladite au moins une paroi (7) pour fournir le conduit d'air (42) entre une surface de paroi et ledit second côté (412) de ladite couche-PCM.

3. Le système selon la revendication 1 ou 2, dans lequel ladite couche-PCM fournit 2,5-4 kg de matériaux PCM par m³ de la chambre.

4. Système selon l'une quelconque des revendications précédentes, dans lequel au moins une paroi fait partie d'un système de paroi de portions comprenant des éléments de paroi de système et des feuilles munies d'une couche de matériau PCM positionnée à distance desdits éléments de paroi de système.

5. Le système selon l'une quelconque des revendications précédentes, dans lequel ladite sortie (43) est fournie par une fente près du plancher (9).

6. Le système selon l'une quelconque des revendications précédentes, **caractérisé en ce que** le premier côté (411) forme la surface extérieure d'une paroi.

7. Le système selon l'une quelconque des revendications précédentes, **caractérisé en ce que** la partie d'alimentation en air comprend en outre des entretoises configurées pour attacher la couche-PCM au soutien et à la positionnement de la couche-PCM (41) à une distance prédéfinie du soutien pour former le conduit d'air (42).

8. le système selon la revendication précédente, **caractérisé en ce qu'**une entretoise comprend un corps allongé s'étendant dans la direction verticale et comprend un profil pour recevoir un bord de la couche-PCM.

9. Le système selon l'une quelconque des revendications précédentes, dans lequel la couche-PCM (41) se présente sous la forme d'une plaque plane.

10. le système selon l'une quelconque des revendications précédentes, dans lequel la couche-PCM (41) au premier côté est recouverte d'une feuille conductrice de chaleur; la feuille conductrice de chaleur est une feuille métallique; ladite feuille conductrice de chaleur est une feuille perforée et un matériau adhésif conducteur de la chaleur associe mécaniquement la couche-PCM (41) et la feuille conductrice de la chaleur.

11. Le système selon l'une quelconque des revendications précédentes, dans lequel la couche-PCM (41) est composée d'un empilement de sous-panneaux rectangulaires, dans lequel chaque sous-panneau comprend un boîtier qui est rempli de matière PCM et a un axe de longueur qui est perpendiculaire à un axe de longueur de la couche-PCM, dans lequel le boîtier est en polypropylène.

12. Le système selon l'une quelconque des revendications précédentes, dans lequel le matériau PCM a une température de fusion correspondant à une température souhaitée dans la zone occupée de ladite chambre.

13. Un procédé de contrôle du climat d'une chambre occupée par des humains, le procédé comprenant la fourniture d'une unité PCM comprenant toutes les caractéristiques techniques d'une pièce d'alimentation d'air (4) selon l'une quelconque des revendications précédentes dans une pièce (2) d'un bâtiment, dans lequel le bâtiment comprend un système de ventilation pour fournir de l'air dans ladite pièce (2), coupler l'unité PCM à une ouverture d'entrée de ventilation du système de ventilation dans ledit bâtiment; et l'activation du système de ventilation pour fournir un flux d'air dans le conduit d'air (42) de la partie d'alimentation d'air (4).

14. Le système de paroi de séparation comprenant le système de ventilation par déplacement selon l'une quelconque des revendications précédentes.
